# EUROPÄISCHE PATENTSCHRIFT

(11) **EP 0 403 725 B1**
(45) Veröffentlichungstag und Bekanntmachung des Hinweises auf die Patenterteilung: **11.08.1993**
(21) Anmeldenummer: 90102722.7
(22) Anmeldetag: 12.02.1990
(51) Int. Cl.: F16F 15/12, F16D 3/58

(54) **Drehschwingungstilger**
Torsional vibration damper
Amortisseur de vibrations de torsion

(30) Priorität: 19.06.1989 DE 8907426 U
(43) Veröffentlichungstag der Anmeldung: 27.12.1990
(73) Patentinhaber: CLOUTH Gummiwerke AG, D-50733 Köln (DE)
(72) Erfinder: Pulm, Anton, D-5204 Lohmar 1 (DE)

(56) Entgegenhaltungen:
- EP-A- 0 291 942
- DE-A- 3 534 519
- DE-U- 8 523 473
- GB-A- 2 180 034

## Beschreibung

Die Erfindung bezieht sich auf einen Drehschwingungstilger, insbesondere für Getriebe von Kraftfahrzeugen, bestehend aus einem mit einer Welle verbindbaren Topf mit zylindrischer Mantelfläche, einem den Topf konzentrisch umgebenden zylindrischen Schwungring und mindestens drei in gleichen Abständen am Umfang des Topfes angeordnete und am Topf und am Schwungring anvulkanisierte Gummistege, bei dem in dem Spalt zwischen Topf und Schwungring mindestens drei in gleichen Abständen angeordnete, teilweise aus Gummi bestehende Distanzhalter am Topf oder am Schwungring anvulkanisiert sind, wobei die Distanzhalter in Richtung des Spaltes einen Gleitkörper aufweisen.

Derartige Drehschwingungstilger sind aus der DE-A 35 34 519 bekannt. Sie werden insbesondere für Personenkraftwagen-Gelenkwellen mit relativ hoher Drehzahl benutzt, weil bei hohen Drehzahlen die Gefahr besteht, daß der elastisch gekuppelte Schwungring durch kleine Unwuchten sich exzentrisch verlagert. Damit einerseits bei niedrigen Drehzahlen die schwingungsdämpfende Wirkung nicht beeinträchtigt wird, andererseits aber bei hohen Drehzahlen eine exzentrische Verlagerung des Schwungringes verhindert wird, wären Distanzhalter notwendig, die keine Gleitreibungskräfte verursachen aber abstandslos am Schwungring anliegen, Abstandhalter also, deren Dicke genau der Dicke des Spaltes zwischen Topf und Schwungring entspricht.

Diese Optimalbedingungen sind praktisch nicht zu erreichen. Ein Spalt von kleiner als 0,2 mm zwischen dem Distanzhalter und dem Schwungring bzw. - wenn der Distanzhalter am Schwungring befestigt ist - zwischen Distanzhalter und Topf von kleiner als 0,2 mm ist nur mit relativ großem Aufwand zu erreichen.

Der Erfindung liegt die Aufgabe zugrunde, einen Drehschwingungstilger zu schaffen, bei dem die Distanzhalter keine störenden Reibkräfte verursachen und trotzdem der Restspalt zwischen Distanzhalter und Schwungring bzw. zwischen Distanzhalter und zylindrischem Mantel des Topfes möglichst klein ist.

Diese Aufgabe wird erfindungsgemäß dadurch gelöst, daß der Gleitkörper eine anvulkanisierte Gleitschicht aus Polytetrafluorethylen (PTFE) ist, deren Dicke 10-60 % der Dicke des Spaltes, vorzugsweise 1-3 mm beträgt, wobei ein kleiner Restspalt zwischen Distanzhalter und Schwungring bzw. zwischen Distanzhalter und zylindrischem Mantel des Topfes von beispielsweise 0,1 mm vorgesehen ist, hervorgerufen durch einen Schwund von 2-3 % des Gummiteils des Distanzhalters nach der Vulkanisation.

Bei dem erfindungsgemäßen Drehschwingungstilger kann die Gleitschicht aus Polytetrafluorethylen unmittelbar an die mit dieser Gleitschicht zusammenwirkenden Zylinderwand angelegt und der verbleibende Raum mit einer Rohgummimasse ausgefüllt werden. Diese Rohgummimasse wird bei der anschließenden Vulkanisation um etwa 2 bis 3 % schrumpfen, so daß ein entsprechend kleiner Spalt zwischen der Gleitschicht und der Zylinderfläche entsteht. Da Polytetrafluorethylen ohnehin sehr gute Gleiteigenschaften aufweist, sind die bei exzentrischer Verlagerung des Schwungringes auftretenden Reibungskräfte gering.

Weitere Merkmale der Erfindung ergeben sich aus den Schutzansprüchen 2 bis 5.

In der folgenden Beschreibung wird ein Ausführungsbeispiel des Drehschwingungstilgers nach der Erfindung unter Bezugnahme auf die Zeichnungen näher erläutert. Die Zeichnungen zeigen in
- Fig. 1: eine Frontansicht eines Drehschwingungstilgers nach der Erfindung,
- Fig. 2: eine Ansicht des Drehschwingungstilgers nach der Schnittlinie II-II in Fig. 1.

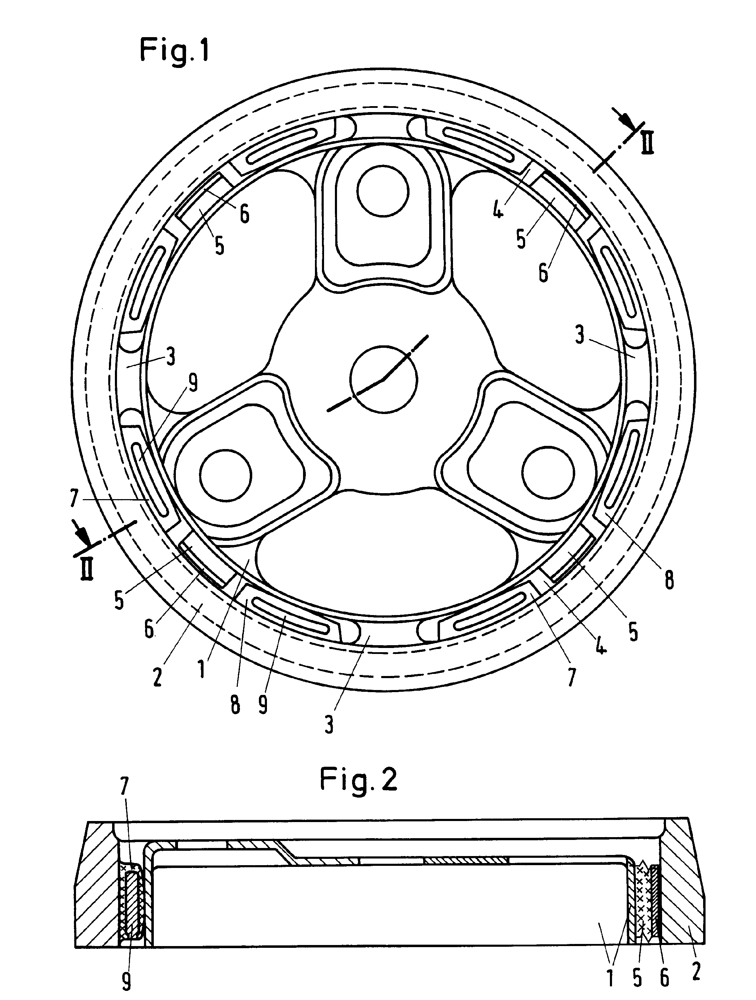

Der in Fig. 1 und 2 dargestellte Drehschwingungstilger besteht aus einem Topf 1, der an einer Welle, insbesondere eines Getriebes, anflanschbar ist und aus einem am Umfang des Topfes 1 über vier Gummistege 3 verbundenen schwingungstilgenden Schwungring 2,der aufgrund seiner Masse und seiner elastischen Ankupplung gegenüber dem Topf 1 Pendelbewegungen ausführen kann. In dem Spalt 4 zwischen Topf 1 und Schwungring 2 sind vier Distanzhalter 5 angeordnet, die aus einem elastomeren Werkstoff bestehen, am Topf 1 anvulkanisiert sind und eine Gleitschicht 6 aus Polytetrafluorethylen aufweisen, die ebenfalls anvulkanisiert ist. Die Gleitschicht 6 wird von einem Stück gebildet, daß von einem Polytetrafluorethylen-Band abgeschnitten ist. Die Dicke dieses Bandes und der daraus zu bildenden Gleitschicht 6 beträgt 10 bis 60% der Dicke des Spaltes 4. Zwischen Gleitschicht 6 und der Zylinderfläche des Schwungringes 2 wird dadurch ein Spalt von beispielsweise 0,1 mm gebildet, daß beim Vulkanisieren zunächst die Gleitschicht 6 satt an der Zylinderfläche anliegt und im weiteren Vulkanisationsprozeß in dem aus Gummi bestehenden Teil des Distanzhalters 5 ein Schwund von 2 bis 3 % auftritt, der einen kleinen Spalt verursacht. Der Spalt wird umso kleiner, je dicker die Gleitschicht 6 auf PTFE ist. Durch eine spezielle Behandlung des PTFE-Bandes wird erreicht, daß bei der Vulkanisation eine innige Verbindung von PTFE-Schicht und dem aus Gummi bestehenden Teil des Distanzhalters 5 eintritt. Zu beiden Seiten jedes Distanzhalters 5 sind in gleichen Abständen Anschläge 7 und 8 angeordnet, die an der zylindrischen Innenfläche des Schwungringes 2 anvulkanisiert sind. Diese Anschläge 7 und 8 begrenzen die Schwingungsausschläge des Schwungringes 2 um den Topf 1.

Die Anschläge 7 und 8 können ebenfalls als Distanzhalter ausgebildet und mit einer PTFE-Gleitschicht versehen sein.

Bei der dargestellten Ausführungsform sind die Anschläge 7 und 8 in bekannter Weise als einstellbare Distanzhalter ausgebildet. In den aus Gummi bestehenden Anschlägen 7 und 8 sind flache Ausnehmungen oder Taschen eingeformt, in welche flache Paßstücke 9 eingesetzt sind. Durch die Dicke der Paßstücke 9 kann der Spalt zwischen den Anschlägen 7,8 und der Zylinderwand des Topfes 1 auf beispielsweise 0,1 oder 0,2 mm eingestellt werden.

Bei der Herstellung des neuen Drehschwingungstilgers wird die anzuvulkanisierende Seite des PTFE-Bandes mit einer Säure behandelt und die angeätzte Seite wird auf einen klebrigen, etwas schmaleren Rohgummistreifen gedrückt und diese Teile zwischen Topf 1 und Schwungring 2 in die Vulkanisationsform gegeben, in der zur Bildung der Gummistege 3, der restlichen Teile der Distanzhalter 5 sowie der Anschläge 7 und 8 eine flüssige Gummimasse unter Druck eingefüllt und dann vulkanisiert wird.

## Patentansprüche

1. Drehschwingungstilger, insbesondere für Getriebe für Kraftfahrzeuge, bestehend aus einem mit einer Welle verbindbaren Topf (1) mit zylindrischer Mantelfläche, einem den Topf (1) konzentrisch umgebenden zylindrischen Schwungring (2) und mindestens drei in gleichen Abständen am Umfang des Topfes (1) angeordneten und am Topf (1) und am Schwungring (2) anvulkanisierten Gummistegen (3), bei dem in dem Spalt (4) zwischen Topf (1) und Schwungring (2) mindestens drei in gleichen Abständen angeordnete, teilweise aus Gummi bestehende Distanzhalter (5) am Topf (1) oder am Schwungring (2) anvulkanisiert sind, wobei die Distanzhalter (5) in Richtung des Spaltes einen Gleitkörper aufweisen,
**dadurch gekennzeichnet,**
daß der Gleitkörper eine anvulkanisierte Gleitschicht (6) aus Polytetrafluorethylen (PTFE) ist, deren Dicke 10-60 % der Dicke des Spaltes (4), vorzugsweise 1-3 mm beträgt, wobei ein kleiner Restspalt zwischen Distanzhalter (5) und Schwungring (2) bzw. zwischen Distanzhalter (5) und zylindrischem Mantel des Topfes (1) von beispielsweise 0,1 mm vorgesehen ist, hervorgerufen durch einen Schwund von 2-3 % des Gummiteils des Distanzhalters (5) nach der Vulkanisation.

2. Drehschwingungstilger nach Anspruch 1, dadurch gekennzeichnet,daß die Gleitschichten (6) aus von einem flachen Polytetrafluorethylen-Band abgeschnittene Stücke gebildet sind.

3. Drehschwingungstilger nach Anspruch 1 oder 2, dadurch gekennzeichnet, daß zu beiden Seiten der am Topf (1) oder am Schwungring (2) anvulkanisierte Distanzhalter (5) mit den Seitenflächen der Distanzahlter (5) zusammenwirkende, am Schwungring (2) oder am Topf (1) anvulkanisierte elastische Anschläge (7,8) anvulkanisiert sind.

4. Drehschwingungstilger nach Anspruch 3, dadurch gekennzeichnet, daß auch die Anschläge (7,8) als Distanzhalter mit einer Gleitschicht aus Polytetrafluorethylen ausgebildet sind.

5. Drehschwingungstilger nach Anspruch 3, dadurch gekennzeichnet, daß die Anschläge (7,8) als einstellbare Distanzhalter ausgebildet sind und flache Taschen aufweisen, in welche flache Paßstücke (9) einsetzbar sind.

## Claims

1. Torsional vibration damper, in particular for gears of motor vehicles, consisting of a pot (1) with cylindrical envelope surface and connectible with a shaft, a cylindrical flywheel ring (2) concentrically surrounding the pot (1) and at least three rubber webs (3) arranged at equal spacing at the circumference of the pot (1) and vulcanised to the pot (1) and to the flywheel ring (2), in which at least three spacer members (5), which consist partially of rubber and are arranged at equal spacings, are vulcanised to either the pot (1) or the flywheel ring (2) in the gap between the pot (1) and the flywheel ring (2), wherein the spacer members (5) have a slide body in the direction of the gap, characterised thereby that the slide body is a slide layer (6), which is vulcanised thereto and of polytetrafluoroethylene (PTFE) and the thickness of which amounts to 10 to 60% of the width of the gap (4), preferably 1 to 3 millimetres, wherein a small residual gap of, for example, 0.1 millimetres produced by a shrinkage of 2 to 3% of the rubber component of the spacer member (5) after the vulcanisation is provided between spacer members (5) and flywheel ring (2) or between spacer members (5) and cylindrical envelope surface of the pot (1).

2. Torsional vibration damper according to claim 1, characterised thereby, that the slide layers (6) are formed from pieces cut off from a flat tape of polytetrafluoroethylene.

3. Torsional vibration damper according to claim 1 or 2, characterised thereby, that elastic abutments (7, 8), which are vulcanised to the flywheel ring (2) or to the pot (1) and co-operate with the side surfaces of the spacer members (5), are vulcanised to both sides of the spacer members (5) vulcanised to either the pot (1) or the flywheel ring (2).

4. Torsional vibration damper according to claim 3, characterised thereby, that the abutments (7, 8) are also formed as spacer members with a slide layer of polytetrafluoroethylene.

5. Torsional vibration damper according to claim 3, characterised thereby, that the abutments (7, 8) are formed as adjustable spacer members and display flat pockets, into which flat adjusting pieces (9) are insertable.

## Revendications

1. Amortisseur de vibrations de torsion, en particulier pour transmissions de véhicules à moteur, constitué d'un tambour (1), à paroi latérale cylindrique, prévu pour être fixé sur un axe, d'un volant cylindrique (2) concentrique au tambour (1) et d'au moins trois entretoises en caoutchouc (3) en positions mutuellement équidistantes à la périphérie du tambour (1) et fixées par vulcanisation au tambour (1) et au volant (2), dans lequel au moins trois éléments d'écartement (5) partiellement constitués de caoutchouc, sont fixés par vulcanisation, au tambour (1) ou au volant (2), dans des positions mutuellement équidistantes, dans l'espace ou entrefer (4) entre le tambour (1) et le volant (2), tandis que les éléments d'écartement (5) présentent du côté de l'entrefer un corps de glissement, caractérisé en ce que le corps de glissement comprend une couche de glissement (6) en polytétrafluoroéthylène (PTFE) déposée par vulcanisation, dont l'épaisseur représente 10 à 60 % de la largeur de l'entrefer (4), de préférence 1 à 3 mm, tandis qu'il existe un petit entrefer résiduel de par exemple 0,1 mm entre l'élément d'écartement (5) et le volant (2), respectivement entre l'élément d'écartement (5) et la paroi latérale cylindrique du tambour (1), dû à un retrait de 2-3% de la partie en caoutchouc de l'élément d'écartement (5) après vulcanisation.

2. Amortisseur de vibrations de torsion selon la revendication 1, caractérisé en ce que les couches de glissement (6) sont formées de pièces découpées dans une bande de polytétrafluoroéthylène.

3. Amortisseur de vibrations de torsion selon la revendication 1 ou la revendication 2, caractérisé en ce que, de part et d'autre de l'élément d'écartement (5) fixé par vulcanisation au tambour (1) ou au volant (2), des butées élastiques (7, 8) coopérant avec les faces latérales de l'élément d'écartement (5), sont fixées par vulcanisation au volant (2) ou au tambour (1).

4. Amortisseur de vibrations de torsion selon la revendication 3, caractérisé en ce que les butées (7, 8) également sont réalisées comme des éléments d'écartement, avec une couche de glissement en polytétrafluoroéthylène

5. Amortisseur de vibrations de torsion selon la revendication 3, caractérisé en ce que les butées (7, 8) sont réalisées en forme d'élément d'écartement réglables et présentent des poches plates dans lesquelles peuvent être introduites des pièces d'ajustage (9) plates.
